# EUROPÄISCHE PATENTANMELDUNG

(11) **EP 3 591 223 A1**
(43) Veröffentlichungstag der Anmeldung: **08.01.2020**
(21) Anmeldenummer: 19183903.4
(22) Anmeldetag: 02.07.2019
(51) Int. Cl.: F03G 7/10

(54) **VORRICHTUNG ZUR BEREITSTELLUNG EINER GERICHTETEN BESCHLEUNIGUNGSKRAFT, FAHRZEUG UND VERFAHREN**

(30) Priorität: 04.07.2018 DE 202018103828 U
(71) Anmelder: Fuchshuber, Gregor, 70597 Stuttgart (DE)
(72) Erfinder: Fuchsuber, Gregor, 70597 Stuttgart (DE)
(74) Vertreter: Held, Stephan

(57) **Zusammenfassung**

Die Erfindung betrifft eine Vorrichtung (1) zur Bereitstellung einer gerichteten Beschleunigungskraft, insbesondere für ein Fahrzeug, mit einem Grundelement, wenigstens einem ersten Führungselement (10), das zur Rotation um ein Rotationszentrum (2) an dem Grundelement gelagert ist, und mit wenigstens einem ersten Massenelement (M; Ml), das bewegbar in oder an dem ersten Führungselement (10) aufgenommen ist. Des Weiteren betrifft die Erfindung ein Fahrzeug und ein Verfahren zur Bereitstellung und/oder Erzeugung und/oder Ausübung einer gerichteten Beschleunigungskraft.

## Beschreibung

Die Erfindung betrifft eine Vorrichtung zur Bereitstellung einer gerichteten Beschleunigungskraft, insbesondere für ein Fahrzeug, mit einem Grundelement, wenigstens einem ersten Führungselement und wenigstens einem ersten Massenelement. Des Weiteren betrifft die Erfindung ein Fahrzeug, insbesondere ein Landfahrzeug, ein Luftfahrzeug, ein Raumfahrzeug oder ein Wasserfahrzeug, mit einer solchen Vorrichtung sowie ein Verfahren zur Bereitstellung / Erzeugung / Ausübung einer gerichteten Beschleunigungskraft.

Üblicherweise wird eine räumliche Fortbewegung bzw. Beschleunigung technischer Systeme, wie z.B. einem Kraftfahrzeug, einem Flugzeug oder einem Boot, durch die Umwandlung einer Motorkraft in eine Drehbewegung erzielt. Die Drehbewegung kann indirekt über ein Getriebe oder direkt auf ein Antriebselement, beispielsweise die Räder eines Autos, einen Propeller oder einen Rotor, übertragen werden.

Ein solches Antriebselement interagiert mit dem umgebenden Medium, um eine Beschleunigung und somit einen Vortrieb für das betreffende Fahrzeug bzw. Fortbewegungsmittel zu erzielen. Die Verwendung desselben Antriebs für z.B. ein Wasserfahrzeug und ein Landfahrzeug ist in aller Regel ineffizient. Vielmehr werden bislang jeweils unterschiedliche Ausgestaltungen von Antriebskonzepten für die diversen Fortbewegungsarten verwendet. So besteht der Nachteil, dass die Antriebselemente auf das jeweilige Umgebungsmedium, z.B. Luft, Wasser oder eine Fahrbahnoberfläche, angepasst werden müssen, um eine zweckmäßige Fortbewegung zu ermöglichen.

Der Erfindung liegt die Aufgabe zugrunde, eine Vorrichtung anzugeben, die eine möglichst effiziente, wartungsarme sowie allgemein einsetzbare, insbesondere medienunabhängige, Beschleunigung und Fortbewegung ermöglicht. Des Weiteren ist es Aufgabe der Erfindung ein Fahrzeug mit einer solchen Vorrichtung anzugeben sowie ein Verfahren zur Bereitstellung und/oder Erzeugung und/oder Ausübung einer gerichteten Beschleunigungskraft.

Diese Aufgabe wird durch eine Vorrichtung gemäß dem unabhängigen Anspruch 1, hinsichtlich des Fahrzeugs gemäß dem Anspruch 14 und hinsichtlich des Verfahrens gemäß dem Anspruch 15 gelöst. Bevorzugte Ausführungsformen sind in den abhängigen Ansprüchen angegeben.

Gemäß der vorliegenden Erfindung ist eine Vorrichtung zur Bereitstellung einer gerichteten Beschleunigungskraft, insbesondere für ein Fahrzeug, mit einem Grundelement vorgesehen, wenigstens einem ersten Führungselement, das zur Rotation um ein Rotationszentrum an dem Grundelement gelagert ist, und mit wenigstens einem ersten Massenelement, das bewegbar in oder an dem ersten Führungselement aufgenommen ist. Das erste Führungselement ist durch das wenigstens eine erste Massenelement in wenigstens ein erstes Volumen und ein zweites Volumen unterteilt, wobei wenigstens ein erster Fluidanschluss an dem ersten Führungselement zur strömungsmäßigen Verbindung mit dem ersten Volumen vorgesehen ist. Das erste Massenelement ist derart in oder an dem ersten Führungselement aufgenommen, dass das erste Massenelement mittels einer Druckdifferenz zwischen dem ersten Volumen und dem zweiten Volumen entlang des ersten Führungselements verschiebbar ist. Das erste Massenelement ist derart gezielt entlang des ersten Führungselements verschiebbar, dass während einer Rotation des ersten Führungselements mittels des ersten Massenelements eine bedarfsweise ausgerichtete Kraft erzeugbar ist, insbesondere zur Beschleunigung bzw. zum Vortrieb der Vorrichtung bzw. eines Fahrzeugs in eine spezifische (Raum-)Richtung.

Die Erfindung basiert auf dem Grundgedanken, dass durch den gezielten Einsatz einer Gewichtsverlagerung entlang einer Kreisbahn bzw. Kreisbewegung und den resultierenden Zentrifugal- und Zentripetalkräften eine Kraft zur Beschleunigung, z.B. eines Fahrzeugs, in eine beliebige Richtung bereitstellbar ist.

Die Vorrichtung kann als ein Zentripetal-Reimpulsantrieb verstanden werden, insbesondere als ein fluidtechnisch betriebener Zentripetal-Reimpulsantrieb. Die Zentripetal-Komponente bzw. -Phase beschreibt hierbei die Ausübung der Vortriebskraft, indem das erste Massenelement an dem ersten oder zweiten Ende auf das Führungselement, und somit auf die gesamte Vorrichtung, eine Fliehkraft bzw. Zentrifugalkraft ausübt. Die Reimpuls-Komponente bzw. -Phase beschreibt insbesondere die Gewichtsrückverlagerung im zeitlichen Anschluss an die Zentripetal-Komponente bzw. -Phase, um eine Zentrifugalkraft des ersten Massenelements auf das erste Führungselement für dessen weitergehende Kreisbewegung bzw. eine Zentripetalkraft zwischen dem ersten Massenelement und dem ersten Führungselement wiederum zu reduzieren. So kann die Reimpuls-Phase derart eingeleitet werden, dass sowohl eine Gewichtsverlagerung stattfindet als auch eine Impulskraft bzw. Reimpulskraft zum Vortrieb in eine spezifische Richtung ausgeübt wird. Zur fortlaufenden Ausübung einer gerichteten (Beschleunigungs-)Kraft liegt somit eine periodische Abfolge von Zentripetal- und Reimpuls-Phasen vor.

Unter einer Beschleunigungskraft kann im Sinne der vorliegenden Erfindung jede Kraft verstanden werden, die zur Erzeugung, Beibehaltung oder Änderung einer räumlichen (Fort-)Bewegung eines Objekts, wie einem beliebig ausgestalteten Fahrzeug, beiträgt.

Insbesondere können anhand der erfindungsgemäßen Vorrichtung positive und negative Beschleunigungen, also Beschleunigungs- und Bremskräfte, in alle Richtungen bedarfsweise erzeugt werden.

Mit Blick auf eine dreidimensionale Bewegung, wie sie z.B. durch ein Luftfahrzeug ausgeübt wird, ist im Sinne der Erfindung auch die Rotation und Kraftausübung entlang einer Kugelfläche vorstellbar.

Gemäß der Erfindung ist ein Grundelement und ein Führungselement vorgesehen, wobei das Führungselement rotatorisch gelagert an dem Grundelement angeordnet ist.

Das Grundelement stellt in diesem Sinne eine Aufnahme, Lagerung und Grundstruktur der Vorrichtung dar, vorzugsweise im Sinne einer Grundplatte. Das wenigstens eine erste Führungselement kann an der Grundplatte aufgenommen, befestigt und gelagert sein. Somit ist eine rotatorische Bewegung des Führungselements um ein Rotationszentrum bzw. eine Rotationsachse möglich.

Ferner kann das Grundelement auch als ein Bestandteil eines zugehörigen Fahrzeugs ausgebildet sein, um das Führungselement der erfindungsgemäßen Vorrichtung zweckmäßig aufzunehmen und zu lagern.

Ferner ist wenigstens ein erstes Massenelement vorgesehen, das bewegbar in oder an dem ersten Führungselement aufgenommen ist. In diesem Sinne kann das Führungselement als eine Führungsschiene oder als ein Zylinderkolben bzw. Führungskolben ausgebildet sein. Das erste Massenelement kann in einem durch das Führungselement definierten Kolbenvolumen angeordnet sein.

Alternativ kann das erste Massenelement derart teilweise in das Kolbenvolumen des Führungselements hineinragen, dass das Führungselement eine Laufschiene oder dergleichen für das erste Massenelement darstellt.

Das erste Führungselement ist durch das Massenelement in ein erstes Volumen und in ein zweites Volumen unterteilt, wobei mindestens ein erster Fluidanschluss zur strömungsmäßigen Verbindung mit dem ersten Volumen vorgesehen ist. Insbesondere kann der erste Fluidanschluss in einem Bereich des ersten Endes des ersten Führungselements angeordnet sein.

In diesem Sinne kann das erste Führungselement als einfach wirkend aufgefasst werden, insbesondere als einfach wirkender Zylinder. Eine Rückstellkraft kann durch eine Federkraft, eine Magnetkraft oder dergleichen in dem ersten Führungselement bereitgestellt sein. So ist es vorstellbar, dass das erste Führungselement mit einem Rückstellelement ausgestaltet ist, insbesondere einer Zug- oder Druckfeder, um eine bedarfsweise, zweckmäßige Rückstellung des ersten Massenelements sicherzustellen. In diesem Sinne kann die Rückstellung des ersten Massenelements in eine beliebige Richtung entlang des ersten Führungselements vorgesehen sein.

Alternativ kann ein zweiter Fluidanschluss an dem ersten Führungselement zur strömungsmäßigen Verbindung mit dem zweiten Volumen vorgesehen sein. Insbesondere können der erste und zweite Fluidanschluss jeweils in einem Endbereich des ersten Führungselements, also in einem Bereich des ersten und zweiten Endes, angeordnet sein. Auf diese Weise ist das erste Führungselement doppeltwirkend ausgestaltbar, vorzugsweise in Form eines doppeltwirkenden Zylinders.

Das Gesamtvolumen des Führungselements wird durch das erste Massenelement zweckmäßig in ein erstes und zweites Volumen unterteilt. In diesem Sinne ist das erste Massenelement vorzugsweise fluiddicht, insbesondere luft- und/oder flüssigkeitsdicht, in dem Führungselement bzw. dem Gesamtvolumen des Führungselements aufgenommen und gelagert. Des Weiteren ist wenigstens an dem ersten Volumen ein erster Fluidanschluss vorgesehen, um in dem ersten Volumen einen spezifischen Fluiddruck gezielt einstellen zu können.

Bevorzugter Weise sind an dem ersten und/oder zweiten Volumen jeweils Fluidanschlüsse vorgesehen, um in dem ersten und/oder zweiten Volumen jeweils einen spezifischen, zweckmäßigen Fluiddruck gezielt einstellen zu können.

Das erste Massenelement ist derart in oder an dem ersten Führungselement aufgenommen, dass das erste Massenelement mittels einer Druckdifferenz zwischen dem ersten und zweiten Volumen entlang des ersten Führungselements bedarfsweise verschiebbar ist. Das erste Massenelement ist derart gezielt entlang des ersten Führungselements verschiebbar, dass während bzw. im Zuge einer Rotation des ersten Führungselements mittels des ersten Massenelements eine gerichtete Kraft erzeugbar ist, insbesondere zur bedarfsweisen Beschleunigung der Vorrichtung bzw. des Fahrzeugs.

Anhand der fluiddichten Anordnung und Aufnahme des ersten Massenelements in dem Führungselement liegen mit dem ersten und zweiten Volumen voneinander getrennte Volumina vor. In dem ersten Volumen kann ein Fluiddruck, also ein hydrostatischer Druck bzw. ein fluidstatischer Druck, vorgesehen sein, der sich von dem Fluiddruck in dem zweiten Volumen unterscheidet. Eine solche Druckdifferenz zwischen dem ersten und zweiten Volumen ermöglicht eine bedarfsweise Verschiebung des ersten Massenelements entlang des ersten Führungselements.

Gemäß der Erfindung ist vorgesehen, dass das Führungselement eine Rotation um das Rotationszentrum ausführt, wobei das erste Massenelement bedarfsweise in Richtung des ersten oder zweiten Endes verschiebbar ist, insbesondere anhand einer Druckdifferenz zwischen dem ersten und zweiten Volumen. Indem das erste Massenelement über einen spezifischen Winkelabschnitt der Kreisbewegung hinweg im Bereich des ersten oder zweiten Endes des ersten Führungselements positioniert ist, wird eine maximale Zentrifugalkraft durch das erste Massenelement auf das erste Führungselement bzw. eine maximale Zentripetalkraft zwischen dem ersten Massenelement und dem ersten Führungselement ausgeübt bzw. übertragen. Auf diese Weise ist eine gezielte Kraft zur Beschleunigung der Vorrichtung bereitstellbar.

Nach einer bevorzugten Ausführungsform ist wenigstens ein erstes Ventil an dem ersten Fluidanschluss vorgesehen. Alternativ kann das erste Ventil an dem ersten Fluidanschluss und ein zweites Ventil an dem zweiten Fluidanschluss vorgesehen sein.

Das erste und/oder zweite Ventil können in diesem Sinne separat zu dem jeweiligen Fluidanschluss oder in dem jeweiligen Fluidanschluss integriert vorgesehen sein. So ist das gezielte Zuführen und Ablassen sowie das Einsperren eines Fluiddrucks in dem ersten und/oder zweiten Volumen des ersten Führungselements möglich.

Gemäß einer bevorzugten Ausführungsform ist vorgesehen, dass das wenigstens eine erste Führungselement mittels eines Hilfsantriebs gegenüber dem Rotationszentrum in Rotation versetzbar ist. Der Hilfsantrieb kann vorzugsweise an dem Grundelement angeordnet sein, sodass der Hilfsantrieb das erste Führungselement zweckmäßig antreiben kann.

Insbesondere kann der Hilfsantrieb ein Schrittmotor, eine Magnetspule, ein Verbrennungsmotor oder dergleichen sein, um eine zweckmäßige, bedarfsweise Rotation des ersten Führungselements zu ermöglichen. Die Beschleunigung der Vorrichtung in eine spezifische Raumrichtung, durch eine Verlagerung des ersten Massenelements, kann unter anderem anhand der Rotation bzw. Rotationsgeschwindigkeit des ersten Führungselements beeinflussbar sein.

Nach einer weiteren Ausführungsform ist wenigstens eine Druckquelle mit dem wenigstens einen ersten Fluidanschluss strömungsmäßig verbindbar, zur bedarfsweisen Bereitstellung eines Fluiddrucks in dem ersten Volumen des wenigstens einen ersten Führungselements.

Vorzugsweise kann die Druckquelle als eine externe Druckquelle, die außerhalb der Vorrichtung und in einem zugehörigen Fahrzeug angeordnet ist, zur Bereitstellung eines zweckmäßigen Fluiddrucks vorgesehen sein. Die Druckquelle kann als ein Fluidkompressor, eine Fluidpumpe und/oder ein Fluiddruckspeicher oder dergleichen ausgebildet sein. Ferner kann die Druckquelle zur Bereitstellung eines Überdrucks und/oder eines Unterdrucks vorgesehen sein. Des Weiteren ist auch eine Kombination aus Fluidkompressor und Fluiddruckspeicher vorstellbar, um eine im Wesentlichen kontinuierliche Betriebsbereitschaft der erfindungsgemäßen Vorrichtung sicherstellen zu können.

Sofern ein erster und zweiter Fluidanschluss vorgesehen sind, kann die Druckquelle mit dem ersten und/oder dem zweiten Fluidanschluss strömungsmäßig verbindbar sein, zur Bereitstellung eines Fluiddrucks in dem ersten und/oder zweiten Volumen des wenigstens einen ersten Führungselements.

Alternativ kann die wenigstens eine Druckquelle an dem wenigstens einen Führungselement angeordnet sein, insbesondere unmittelbar auf oder an dem wenigstens einen ersten Führungselement. Somit kann vorteilhafter Weise auf umfangreiche Fluidwege bzw. Fluidleitungen bzw. Fluiddruck-Leitungseinheiten zur Zuführung des Druckfluids zu dem ersten und/oder zweiten Volumen des ersten Führungselements verzichtet werden.

Es ist vorstellbar, dass die Fluidwege integral in dem wenigstens einen ersten Führungselement ausgebildet sind, mit dem ersten und/oder zweiten Fluidanschluss zur Zuführung des Druckfluids in das erste und/oder zweite Volumen. Die Druckquelle kann vorzugsweise in oder an dem Rotationszentrum des wenigstens einen ersten Führungselements angeordnet sein, sodass die Druckquelle bei Rotation des ersten Führungselements keine oder zumindest keine wesentliche Zentrifugalkraft ausübt bzw. verursacht.

Darüber hinaus kann das Fluidsystem als ein geschlossenes Druckfluidsystem ausgestaltet sein. In diesem Sinne kann das Druckfluid beispielsweise nach dem Ablassen aus dem ersten und/oder zweiten Volumen des ersten Führungselements auffangbar und wiederverwendbar sein.

Des Weiteren ist es vorstellbar, dass der Fluiddruck in dem ersten und/oder zweiten Volumen des ersten Führungselementes abhängig von der Rotation des ersten Führungselements, insbesondere der Rotationsgeschwindigkeit, einstellbar ist.

Insbesondere kann wenigstens ein Drucksensor an bzw. in dem ersten Führungselement vorgesehen sein, zur gezielten Erfassung und Einstellung eines Fluiddrucks in dem ersten und/oder zweiten Volumen, bevorzugter Weise in Verbindung mit einer geeigneten Steuereinheit zur Kontrolle, Steuerung und/oder Regelung des Fluiddrucks. Auch kann wenigstens ein Positionssensor an oder in dem ersten Führungselement zur Positionsbestimmung des ersten Massenelements in zweckmäßiger Verbindung mit der Steuereinheit vorgesehen sein.

In einer bevorzugten Ausführungsform ist vorgesehen, dass der erste Fluidanschluss mit einer ersten Fluiddruck-Leitungseinheit strömungsmäßig verbindbar bzw. verbunden ist und in dieser gelagert ist, insbesondere gleitend gelagert ist. Auf diese Weise kann der erste Fluidanschluss, und somit das erste Volumen, mit einem Fluid bzw. Druckfluid versorgt werden.

Des Weiteren kann vorgesehen sein, dass der zweite Fluidanschluss des ersten Führungselements mit einer zweiten Fluiddruck-Leitungseinheit strömungsmäßig verbindbar bzw. verbunden ist und in dieser gelagert ist, insbesondere gleitend gelagert ist.

Bevorzugter Weise können die erste und/oder zweite Fluiddruck-Leitungseinheit als Nuten, Schienen oder dergleichen in Umfangsrichtung entlang des Grundelements ausgebildet sein. In diesem Sinne können die erste und/oder zweite Fluiddruck-Leitungseinheit integral in dem Grundelement ausgebildet sein. So münden der erste und/oder zweite Fluidanschluss jeweils in die erste bzw. zweite Fluiddruck-Leitungseinheit. Darüber hinaus sind der erste und/oder zweite Fluidanschluss vorzugsweise derart in der jeweiligen Fluiddruck-Leitungseinheit aufgenommen und gelagert, dass eine dichtende Verbindung zur zweckmäßigen Weiterleitung von Druckfluid bis in das erste und/oder zweite Volumen vorliegt.

Des Weiteren können die beispielsweise nuten- und kreisförmig ausgestalteten Fluiddruck-Leitungseinheiten unterschiedliche Durchmesser bzw. Kreisinnendurchmesser aufweisen, sodass die erste und zweite Fluiddruck-Leitungseinheit räumlich voneinander getrennt an dem Grundelement ausgebildet sind.

Alternativ können die erste und zweite Fluiddruck-Leitungseinheit beispielsweise in Form einer schalenförmigen Bauweise entlang der Rotationsachse ausgebildet sein, insbesondere integral ausgebildet sein, zur Bereitstellung von in radialer Richtung getrennten Strömungswegen.

Des Weiteren ist vorgesehen, dass der erste Fluidanschluss mit der ersten Fluiddruck-Leitungseinheit lediglich strömungsmäßig verbindbar ist, insbesondere bei Anordnung der wenigstens einen Druckquelle an oder in dem wenigstens einen ersten Führungselement. Dabei können die erste und/oder zweite Fluiddruck-Leitungseinheit integral in dem ersten Führungselement ausgebildet sein.

Es ist eine positions- bzw. rotationsunabhängige Fluiddruckversorgung für das erste und/oder zweite Volumen des ersten Führungselements bereitstellbar.

Gemäß einer bevorzugten Ausführungsform ist das Führungselement mit dem ersten Ende an einer äußeren Kreisbahn und mit dem zweiten Ende an dem Rotationszentrum angeordnet oder das erste und zweite Ende des Führungselements sind äquidistant zu dem Rotationszentrum angeordnet.

So kann das erste Führungselement im Wesentlichen zwischen dem Rotationszentrum und der äußeren Kreisbahn angeordnet sein. Das erste Führungselement ist in diesem Sinne mit dem zweiten Ende im Bereich des Rotationszentrums bzw. der Rotationsachse angeordnet, während das erste Ende des ersten Führungselements auf der äußeren Kreisbahn angeordnet ist.

Des Weiteren ist es möglich, dass das erste Führungselement mit dem ersten und zweiten Ende jeweils auf der äußeren Kreisbahn angeordnet ist. In diesem Sinne kann das erste Führungselement mit einem mittleren Bereich seiner Längserstreckung in dem Rotationszentrum bzw. der Rotationsachse der Vorrichtung zweckmäßig angeordnet und gelagert sein.

In einer weiteren Ausführungsform ist vorgesehen, dass eine Magnetspule an dem zweiten Ende des ersten Führungselements oder im Rotationszentrum des ersten Führungselements vorgesehen ist, sodass das erste Massenelement des ersten Führungselements magnetisch fixierbar ist. In diesem Sinne kann das erste Massenelement in zweckmäßiger Form magnetisch interagierend bzw. magnetisierbar ausgestaltet sein.

Das erste Massenelement ist berührungslos bzw. kontaktlos, insbesondere elektromagnetisch, in dem ersten Führungselement fixierbar. Auf vorteilhafte Weise kann das Massenelement an dem zweiten Ende des ersten Führungselements oder im Rotationszentrum der Vorrichtung, also jeweils in Nähe zum Rotationszentrum, fixierbar sein, um eine Zentrifugalkraft während der Rotation des ersten Führungselements zu minimieren.

Alternativ kann das Massenelement mittels wenigstens eines mechanisch bewegbaren Bolzenelements in dem ersten Führungselement fixierbar sein. In diesem Sinne kann das Bolzenelement mittels eines Schrittmotors, eines Servomotors, eines Fluiddrucks oder dergleichen zwischen einer ersten Position, zum mechanischen Eingriff in das Massenelement, und einer zweiten Position, zur Freigabe einer Bewegung des Massenelements entlang dem wenigstens einen ersten Führungselement, bewegbar sein.

Vorzugsweise erfolgt eine Bewegung des Bolzenelements senkrecht zu der linearen Bewegungsrichtung des Massenelements in dem Führungselement oder in rotatorischer Richtung. Des Weiteren kann das Bolzenelement federbelastet sein, um das Bolzenelement im Fehlerfall in die erste oder zweite Position zurückzustellen bzw. dort zu sichern. Auf diese Weise ist eine einfache, zuverlässige Möglichkeit zur Fixierung des Massenelements in dem Führungselement verfügbar.

Gemäß einer bevorzugten Ausführungsform ist eine Mehrzahl von Führungselementen mit jeweils einem Massenelement um das Rotationszentrum symmetrisch verteilt angeordnet. Die mehreren Führungselemente können in einer Ebene, vorzugsweise orthogonal zur Rotationsachse, angeordnet sein.

Alternativ können die Führungselemente entlang der Rotationsachse bzw. in Richtung der Rotationsachse versetzt zueinander angeordnet sein, insbesondere entlang einer Grundachse als Grundelement. Vorzugsweise können die ersten und zweiten Enden der Führungselemente jeweils äquidistant zu dem Rotationszentrum bzw. der Rotationsachse positioniert sein. Die ersten und zweiten Enden sind in diesem Sinne auf der äußeren Kreisbahn positioniert, wobei die Führungselemente mit ihrer längsseitigen Mitte jeweils im Rotationszentrum angeordnet sind.

Des Weiteren kann gemäß einer Ausführungsform vorgesehen sein, dass die Führungselemente derart in einer jeweiligen Rotationsrichtung, einer jeweiligen Kreiswinkelposition zueinander und einer jeweiligen Position des zugehörigen Massenelements steuerbar sind, sodass eine im Wesentlichen gleichmäßige bzw. kontinuierliche Kraft zur Beschleunigung, z.B. eines zugehörigen Fahrzeugs, erzeugbar ist.

Indem mehrere Führungselemente mit jeweils einem zweckmäßig steuerbaren Massenelement vorgesehen sind, kann eine erzeugbare Vortriebs- bzw. Beschleunigungskraft im Wesentlichen kontinuierlich bereitstellbar sein. Des Weiteren können Dreh- bzw. Rollmomente der erfindungsgemäßen Vorrichtung vorgebeugt werden, indem die Rotation der Führungselemente zweckmäßig adaptiert bzw. aufeinander abgestimmt wird. Insbesondere können die Rotationsrichtungen mehrerer Führungselemente gegenläufig vorgesehen sein. So können sich Kräfte aus den Rotationen der Führungselemente im Wesentlichen gegenseitig aufheben.

In einer weiteren bevorzugten Ausführungsform ist wenigstens eine Stabilisierungseinheit, insbesondere eine stabilisierende Kreiseleinheit, vorgesehen, die an der Vorrichtung, insbesondere an dem wenigstens einen ersten Führungselement, angeordnet ist und wenigstens zeitweise eine Stabilisierungsachse ausbildet, wobei die Stabilisierungsachse versetzt, insbesondere durch einen Winkelversatz oder translatorisch versetzt, zu und/oder wenigstens teilweise überlagernd mit einer Rotationsachse des wenigstens einen ersten Führungselementes ausgerichtet ist, zur bedarfsweisen Bereitstellung einer stabilisierenden Kraft auf die Vorrichtung, insbesondere auf das wenigstens eine erste Führungselement.

Insbesondere kann die stabilisierende Kraft mittels der Stabilisierungseinheit aktiv, vorzugsweise durch den zweckmäßigen Einsatz von Antrieben bzw. Antriebseinheiten, und in gezielter, bedarfsweiser Form bereitstellbar sein.

Die Stabilisierungsachse stellt vorzugsweise eine Rotationsachse der Stabilisierungseinheit dar, also eine Achse, um die wenigstens ein Teil der Stabilisierungseinheit rotiert. Insbesondere können die Rotationen des wenigstens einen Führungselements und der wenigstens einen Stabilisierungseinheit als voneinander unabhängig bzw. entkoppelt verstanden werden.

Es ist bevorzugter Weise vorgesehen, dass die wenigstens eine Stabilisierungseinheit der Vorrichtung an dem wenigstens einen Führungselement angeordnet ist. Des Weiteren ist vorstellbar, dass die Stabilisierungseinheit als in das Führungselement unmittelbar integriert ausgestaltet ist. Alternativ kann die Stabilisierungseinheit an einer anderen beliebigen Komponente der Vorrichtung angeordnet bzw. befestigt sein. Somit kann die Vorrichtung als ein System mit unter anderem wenigstens einem ersten Führungselement zur Erzeugung einer Beschleunigungskraft und wenigstens einer Stabilisierungseinheit zur Stabilisierung bzw. gezielten Ausrichtung der erzeugten Beschleunigungskraft verstanden werden, um eine stabilisierte, gerichtete Beschleunigung bzw. Bewegung mittels der erfindungsgemäßen Vorrichtung zu bereitzustellen.

Indem die Vorrichtung mit der Stabilisierungseinheit ausgebildet ist, kann eine stabilisierte, gerichtete Bewegung bzw. Beschleunigung der Vorrichtung bereitgestellt werden.

In einer weiteren bevorzugten Ausführungsform ist die Stabilisierungseinheit als eine stabilisierende Kreiseleinheit ausgebildet, mit wenigstens einem Halteelement sowie einem Kreiselelement, wobei das Kreiselelement gegenüber dem wenigstens einen ersten Führungselement um alle drei Raumachsen rotatorisch bewegbar gelagert ist.

Insbesondere kann die Aufnahme des Kreiselelements über ein erstes und ein zweites Ringelement sowie ein Y-Gabelelement erfolgen, wobei die Ringelemente über das Y-Gabelelement mit dem Halteelement verbunden sind.

Indem jeweils entlang einer der Raumachsen
- das Kreiselelement in dem ersten Ringelement rotatorisch bewegbar aufgenommen ist, und/oder
- das erste Ringelement in dem zweiten Ringelement rotatorisch bewegbar aufgenommen ist, und/oder
- das zweite Ringelement rotatorisch bewegbar an dem Y-Gabelelement rotatorisch bewegbar aufgenommen ist und/oder
- das Y-Gabelelement rotatorisch bewegbar an dem Halteelement und/oder
- das Halteelement rotatorisch bewegbar an dem ersten Führungselement aufgenommen ist,
kann eine rotatorische Bewegbarkeit des Kreiselelementes um vorzugsweise sämtliche Raumachsen bereitgestellt werden. Das Kreiselelement kann demnach um alle drei Raumachsen rotatorisch gelagert verstanden werden.

Gemäß einer weiteren Ausführungsform ist das Kreiselelement mittels dem Halteelement in einem Abstand zu dem wenigstens einen ersten Führungselement angeordnet.

Der Abstand zwischen dem Kreiselelement und dem Führungselement stellt einen mechanischen Hebel dar bzw. bedingt eine mechanische Hebelwirkung. Dieser mechanische (Abstands-)Hebel führt dazu, dass eine durch den zweckmäßigen Einsatz des Führungselementes applizierte Beschleunigungskraft eine Neigungs- / Auslenkungs- / Nebenkraft auf die Stabilisierungsachse der Stabilisierungseinheit bzw. des rotierenden Kreiselelements ausübt. Dabei übt das rotierende Kreiselelement im Zuge der Neigung bzw. Auslenkung bzw. einer sogenannten Präzession der Stabilisierungsachse wiederum eine Gegenkraft aus. Es ist jedoch mittels dem Kreislelement auch eine Gegenkraft gezielt in eine Richtung applizierbar, sodass in Summe eine Beschleunigung der Vorrichtung in eine gewünschte Raumrichtung bereitstellbar ist und von der gewünschten Beschleunigungsrichtung abweichende Beschleunigungskräfte wenigstens teilweise kompensierbar sind.

In diesem Sinne liegt dem erfindungsgemäßen Einsatz der Stabilisierungseinheit das physikalische Prinzip zu Grunde, dass ein rotierender Körper, wie z.B. ein Kreisel, gegen eine Neigung bzw. Auslenkung seiner eigenen Rotationsachse eine Gegenkraft aufbringt, wohingegen eine translatorische Verschiebung des sich drehenden Körpers keine Widerstands- / Gegenkraft auslöst.

Demnach kann durch die beabstandete Anordnung der Stabilisierungseinheit gegenüber dem wenigstens einen ersten Führungselement eine Stabilisierung erzielt werden, wobei unerwünschten Beschleunigungskräften, insbesondere in andere als der vorgesehenen Bewegungsrichtung, entgegengewirkt werden kann.

Insbesondere ist im Sinne der vorliegenden Erfindung zu erwarten, dass während der Erzeugung einer gerichteten Beschleunigungskraft mittels der erfindungsgemäßen Vorrichtung weitere Beschleunigungskräfte, abweichend von der vorgesehenen Beschleunigungsrichtung, auftreten und mittels der Stabilisierungseinheit zumindest im Wesentlichen eliminierbar sind.

Somit können/kann unerwünschten translatorischen Bewegungen bzw. Neigungsbewegungen des wenigstens einen ersten Führungselementes vermieden bzw. entgegengewirkt werden. Es ist eine Stabilisierung der Vorrichtung bereitstellbar, wobei lediglich eine geringfügige Beeinflussung der Beschleunigung bzw. Bewegung in die gewünschte Bewegungsrichtung erfolgt.

Nach einer weiteren Ausführungsform ist wenigstens ein erster Rotationsantrieb zur aktiven bzw. bedarfsweisen Rotation des Kreiselelements um wenigstens eine der Raumachsen vorgesehen.

Vorzugsweise kann jeweils wenigstens ein Rotationsantrieb pro Raumachse bereitgestellt werden, um die Stabilisierungseinheit bzw. das Kreiselelement zweckmäßig aktiv anzutreiben und bedarfsweise zu rotieren. Auf diese Weise kann eine im Wesentlichen beliebige Neigungs- / Auslenkungs- / Präzessionskraft auf die Stabilisierungsachse der Stabilisierungseinheit bedarfsweise eliminiert werden, um einer unerwünschten translatorischen Bewegung oder Neigungsbewegung der Vorrichtung zweckmäßig entgegenwirken zu können.

Bevorzugter Weise wird eine Masse des Kreiselelements möglichst gering gehalten, um bei der Translationsbewegung eine geringe Massenträgheit zu gewährleisten, wobei die Rotations- bzw. Winkelgeschwindigkeit des Kreiselelements möglichst hoch vorgesehen wird. So kann mittels dem Kreiselelement bzw. der Kreiseleinheit eine geeignete (Gegen-/Widerstands-)Kraft im Rahmen der Neigung bzw. Präzession der Stabilisierungsachse bereitgestellt werden.

Insbesondere kann vorgesehen sein, dass die vorzugsweise mehreren Rotationsantriebe an den einzelnen Drehgelenken der jeweiligen rotatorischen Aufnahme des Kreiselelements bzw. des ersten Ringelements, des zweiten Ringelements, des Y-Gabelelements und/oder des Halteelements angeordnet sind bzw. angreifen.

Ferner können das erste und zweite Ringelement ringförmig ausgebildet sein oder abweichende, vorzugsweise das Kreiselelement umgreifende Geometrie aufweisen.

Sind mehrere Stabilisierungseinheiten an einem oder mehreren Führungselementen angebracht, können diese Stabilisierungseinheiten gegenüber der Rotationsachse der Führungselemente schwenkbar bzw. puffernd bzw. federnd gelagert angebracht sein. Dadurch wird ein flexibles Auffangen wenigstens eines Teils der unerwünschten Bewegungen der Vorrichtung während seiner zweckmäßigen Verwendung ermöglicht. Eine mechanische Hebelwirkung der Stabilisierungseinheit wird optimiert.

Die Ausgangsposition der Schwenkbewegung bzw. der Stabilisierungsachse ist vorzugsweise parallel zur Rotationsachse des wenigstens einen ersten Führungselementes vorgesehen. Während die Fliehkräfte des wenigstens einen Massenelementes auf das wenigstens eine erste Führungselement entlang der Kreisbahn in sich kontinuierlich verändernde Richtungen einwirken, wird die Stabilisierungseinheit geschwenkt bzw. ausgelenkt. Dieser Auslenkung bzw. Präzession der Stabilisierungsachse kann mit der Stabilisierungseinheit insbesondere aktiv entgegengewirkt werden, sodass unerwünschte Bewegungsimpulse reduziert werden. Die Fortbewegung der Vorrichtung ist stabilisierbar, sodass eine gerichtete Beschleunigung in eine gewünschte Raumrichtung ermöglicht wird.

Das Zurückschwenken in die Ausgangsposition kann insbesondere durch die Fortbewegung der Vorrichtung und die Massenträgheit der Stabilisierungseinheit in der Reimpuls-Phase erfolgen.

In einem nebengeordneten Aspekt betrifft die vorliegende Erfindung ein Fahrzeug, insbesondere ein Landfahrzeug, ein Luftfahrzeug, ein Raumfahrzeug oder ein Wasserfahrzeug, mit einer erfindungsgemäßen Vorrichtung. Auf diese Weise kann eine Vielzahl von verschiedenen Fortbewegungsmitteln bzw. Fahrzeugen vorgesehen sein, die in Verbindung mit der erfindungsgemäßen Vorrichtung für unterschiedlichste Umgebungen, wie zu Land, in der Luft oder im Wasser, zweckmäßig ausgestaltet sind.

Insbesondere kann mit einem erfindungsgemäßen Fahrzeug eine Typübergreifende bzw. medienübergreifende Fortbewegung ermöglicht werden. So ist vorstellbar, dass ein erfindungsgemäßes Fahrzeug sowohl zu Land, im Wasser als auch in der Luft mittels derselben, erfindungsgemäßen Vorrichtung eingesetzt werden kann, um einen Vortrieb bzw. eine Fortbewegung zu ermöglichen.

Anhand der erfindungsgemäßen Vorrichtung ist eine Bewegung bzw. Beschleunigung des erfindungsgemäßen Fahrzeugs in alle Raumrichtungen möglich. Insbesondere kann die erfindungsgemäße Vorrichtung in dem erfindungsgemäßen Fahrzeug hierzu um wenigstens eine Raumachse verkippbar ausgestaltet sein.

Insbesondere kann eine Verkippung bzw. ein Schwenken der Vorrichtung innerhalb des Fahrzeugs beispielsweise mit einem Schrittmotor, einem Servomotor oder dergleichen erfolgen, vorzugsweise während des Betriebs der erfindungsgemäßen Vorrichtung zur Erzeugung einer Beschleunigung bzw. eines Vortriebs. Somit kann eine Beschleunigung des Fahrzeugs sowohl in horizontaler Richtung als auch in vertikaler Richtung bedarfsweise bereitgestellt werden.

Des Weiteren kann die Vorrichtung in dem erfindungsgemäßen Fahrzeug in einem Bereich angeordnet sein, der luftleer ist bzw. ein Vakuum aufweist, um den Luftwiderstand bzw. die Reibungskräfte zu reduzieren.

Im Sinne der erfindungsgemäßen Vorrichtung bzw. des erfindungsgemäßen Fahrzeugs kann in einem nebengeordneten Aspekt der Erfindung ferner ein Verfahren zur Bereitstellung bzw. Erzeugung bzw. Ausübung einer gerichteten Beschleunigungskraft umgesetzt werden, welches die folgenden Schritte aufweist.

In einem ersten Schritt wird die rotatorische Bewegung des wenigstens einen ersten Führungselements bereitgestellt.

In einem zweiten Schritt wird eine Druckdifferenz zwischen dem ersten und zweiten Volumen eingestellt, sodass das erste Massenelement in einem spezifischen Punkt bzw. Winkelbereich der rotatorischen Bewegung des Führungselements zum ersten oder zweiten Ende des ersten Führungselements ausgelenkt wird.

In einem dritten Schritt wird die Druckdifferenz zwischen dem ersten und zweiten Volumen bedarfsweise umgekehrt, sodass das Massenelement in den Bereich bzw. die Nähe des Rotationszentrums zurückkehrt, insbesondere um eine Trägheitskraft bzw. Zentrifugalkraft des ersten Massenelements bzw. eine von dem wenigstens einen ersten Führungselement ausgeübte Zentripetalkraft zu reduzieren. In diesem Sinne wird ein Reimpuls bzw. eine Reimpulskraft erzeugt, wobei sowohl eine Massenverschiebung eingeleitet als auch eine Impulskraft auf das erste Führungselement zur gerichteten Beschleunigung initiierbar ist. Insbesondere kann die Druckdifferenz derart schlagartig umgekehrt werden, dass der Reimpuls eine Impulskraft auf das erste Führungselement ausübt, z.B. durch die Einleitung eines Druckfluids in das erste oder zweite Volumen des ersten Führungselements.

Mittels der gezielten Verschiebung des Massenelements an das erste oder zweite Ende des Führungselements während der Rotationsbewegung bzw. eines bestimmten Winkelabschnitts der Rotationsbewegung des ersten Führungselements, kann eine Kraft zur Beschleunigung der Vorrichtung bzw. des Fahrzeugs in eine beliebige (Raum-)Richtung ausgeübt werden.

Nachfolgend wird die vorliegende Erfindung mit Bezug auf die beigefügten Zeichnungen näher erläutert.

Es zeigen schematisch:
- Fig. 1:: ein erstes Ausführungsbeispiel einer erfindungsgemäßen Vorrichtung mit einem ersten Führungselement;
- Fig. 2:: ein zweites Ausführungsbeispiel der erfindungsgemäßen Vorrichtung zu verschiedenen Zeitpunkten einer Rotationsbewegung des ersten Führungselements;
- Fig. 3:: eine Seitenansicht einer Stabilisierungseinheit;
- Fig. 4:: ein drittes Ausführungsbeispiel der Vorrichtung mit der Stabilisierungseinheit;
- Fig. 5:: ein viertes Ausführungsbeispiel der Vorrichtung mit symmetrischer Anordnung von erstem und zweitem Führungselement sowie mit Stabilisierungseinheiten; und
- Fig. 6:: eine Seitenansicht des Ausführungsbeispiels gemäß Fig. 5 mit zwei Stabilisierungseinheiten.

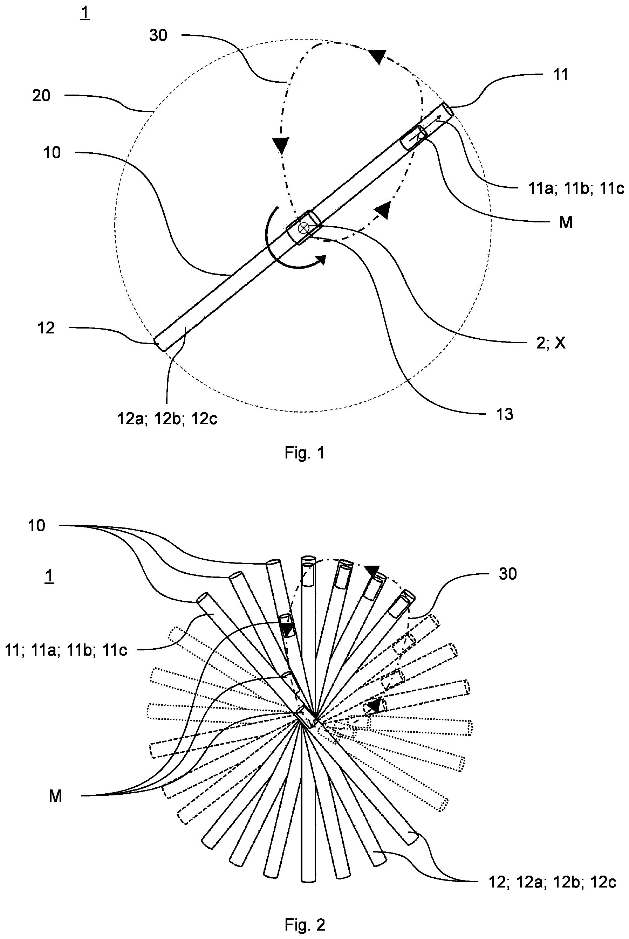

In Fig. 1 ist ein erstes Ausführungsbeispiel einer erfindungsgemäßen Vorrichtung 1 mit einem ersten Führungselement 10 gezeigt. Das Führungselement 10 ist vorzugsweise an einem Grundelement (in Fig. 1 nicht gezeigt) aufgenommen und gelagert.

Das erste Führungselement 10 ist zylinderförmig ausgestaltet und erstreckt sich über ein Rotationszentrum 2 entlang einer Rotationsachse X der Vorrichtung 1 hinweg. So ist das erste Führungselement 10 mit seiner längsseitigen Mitte in dem Rotationszentrum 2 angeordnet.

Des Weiteren weist das erste Führungselement 10 ein erstes Ende 11 und ein zweites Ende 12 auf. Die Enden 11; 12 des ersten Führungselements 10 sind äquidistant zu dem Rotationszentrum 2 angeordnet.

Ferner sind das erste und zweite Ende 11; 12 des ersten Führungselements 10 auf einer äußeren Kreisbahn 20 angeordnet. Die äußere Kreisbahn 20 beschreibt gemäß Fig. 1 den Weg des ersten und zweiten Endes 11; 12 während einer verwendungsgemäßen Rotation des ersten Führungselements 10.

Nach Fig. 1 ist eine Rotation des ersten Führungselements 10 um das Rotationszentrum 2 bzw. die Rotationsachse X gegen den Uhrzeigersinn vorgesehen. Alternativ kann eine Rotation in Richtung des Uhrzeigersinns erfolgen. Ferner können bei einer Mehrzahl von Führungselementen die gleiche oder unterschiedliche Dreh- bzw. Rotationsrichtungen vorgesehen sein.

Innerhalb des ersten Führungselements 10 ist ein erstes Massenelement M gezeigt. Das Massenelement M ist in einem röhrenförmigen Zylinder- bzw. Kolbenvolumen des ersten Führungselements 10 bewegbar angeordnet. Gemäß Fig. 1 weist das erste Massenelement M zu dem dargestellten Zeitpunkt eine Bewegung in Richtung des ersten Endes 11 des ersten Führungselements 10 auf (vgl. dargestellte Pfeilrichtung an dem ersten Massenelement M).

Das erste Massenelement M ist derart in dem ersten Führungselement 10 aufgenommen und bewegbar angeordnet, dass das Zylindervolumen des ersten Führungselements 10 in ein erstes Volumen 11a und ein zweites Volumen 12a unterteilt ist.

Das erste Volumen 11a ist in Richtung des ersten Endes 11 des ersten Führungselements 10 ausgebildet. Das zweite Volumen 12a ist in Richtung des zweiten Endes 12 des ersten Führungselements 10 ausgebildet.

Indem das erste Massenelement M in dem ersten Führungselement 10 bewegbar angeordnet ist, können das erste und zweite Volumen 11a; 12a korrespondierend zueinander vergrößert bzw. verkleinert werden, in Abhängigkeit von der Position und der Bewegungsrichtung des ersten Massenelements M.

Im Sinne des ersten Ausführungsbeispiels gemäß Fig. 1 ist ferner vorgesehen, dass das erste Volumen 11a über einen ersten Fluidanschluss 11b mit einer Druckluftquelle bzw. Druckfluidquelle (in Fig. 1 nicht dargestellt) strömungsmäßig verbindbar ist. Ebenso ist das zweite Volumen 12a über einen zweiten Fluidanschluss 12b strömungsmäßig verbindbar bzw. zugänglich vorgesehen. Vorzugsweise sind der erste und zweite Fluidanschluss 11b; 12b (in Fig. 1 nicht explizit dargestellt) im jeweiligen Bereich des ersten und zweiten Endes 11; 12 des ersten Führungselements 10 vorgesehen. Anhand des ersten und zweiten Fluidanschlusses 11b; 12b kann ein jeweiliger, spezifischer Fluiddruck in dem ersten und zweiten Volumen 11a; 12a bereitgestellt werden.

Bevorzugter Weise an oder in dem ersten und zweiten Fluidanschluss 11b; 12b ist jeweils ein erstes Ventil 11c bzw. ein zweites Ventil 12c zur vollständigen oder teilweisen Sperrung des Strömungsweges zu dem ersten bzw. zweiten Volumen 11a; 12a vorgesehen.

So ist ein Fluiddruck, also ein pneumatischer oder ein hydraulischer Druck, in dem ersten und/oder zweiten Volumen 11; 12 des ersten Führungselements 10 bereitstellbar. Indem zwischen dem ersten und zweiten Volumen 11; 12 eine Druckdifferenz bereitgestellt wird, ist eine bedarfsweise Bewegung des ersten Massenelements M in dem ersten Führungselement 10 erzielbar.

Anhand der Bewegung des ersten Massenelements M entlang des ersten Führungselements 10 in Folge einer Druckdifferenz zwischen dem ersten und zweiten Volumen 11; 12, wird eine Gewichtsverlagerung erzielt. Bei gleichzeitiger Rotation des ersten Führungselements 10 um das Rotationszentrum 2 bzw. die Rotationsachse X führt die Verschiebung des ersten Massenelements M zu einer Zentrifugalkraft, die von dem ersten Massenelement M über das erste Führungselement 10 auf die Vorrichtung 1 übertragen wird.

Im Sinne der vorliegenden Erfindung und dem ersten Ausführungsbeispiel gemäß Fig. 1 ist vorgesehen, dass das erste Massenelement M während der Rotation des ersten Führungselements 10 ausgelenkt wird, sodass das erste Massenelement M eine Bewegung gemäß einer vorgesehenen Bewegungsbahn 30 vollziehen kann.

Es ist vorgesehen, dass das erste Massenelement M bei Rotation des ersten Führungselement 10 in einem spezifischen Drehwinkel des Führungselements 10 aus dem Rotationszentrum 2 in Richtung des ersten Endes 11 bewegt wird. Dies kann durch eine Druckdifferenz zwischen dem ersten und zweiten Volumen 11; 12 erfolgen, insbesondere durch einen höheren Fluiddruck in dem zweiten Volumen 12 bzw. einen niedrigeren Fluiddruck in dem ersten Volumen 11.

Alternativ kann vorgesehen sein, dass eine Auslenkung des ersten Massenelements M während der Rotation des ersten Führungselements 10 allein anhand der auf das Massenelement M wirkenden Zentrifugalkraft, also ohne das Anlegen einer zusätzlichen Druckdifferenz zwischen dem ersten und zweiten Volumen 11; 12, erfolgt.

Das erste Massenelement M wird derart in Richtung des ersten Endes 11 bewegt, dass das erste Massenelement M ab einem bestimmten Drehwinkel seine maximale Auslenkung erreicht hat und aufgrund der Massenträgheit eine maximale Zentrifugalkraft auf das erste Führungselement 10 ausüben kann bzw. eine maximale Zentripetalkraft durch das erste Führungselement 10 ausgeübt werden kann.

Anschließend kann durch eine Umkehr der Druckdifferenz zwischen dem ersten und zweiten Volumen 11; 12, insbesondere durch einen höheren Fluiddruck in dem ersten Volumen 11 bzw. einen niedrigeren Fluiddruck in dem zweiten Volumen 12, eine Zurückführung des ersten Massenelements M in Richtung des Rotationszentrums 2 erfolgen, um eine Zentrifugalkraft des ersten Massenelements M bzw. eine Zentripetalkraft des ersten Führungselements 10 für die weitere Drehbewegung bzw. den übrigen Drehwinkel des ersten Führungselements 10 zu minimieren.

Des Weiteren wird anhand der Umkehr der Druckdifferenz vorzugsweise eine Reimpulskraft auf das erste Führungselement 10 ausgeübt, sodass eine zusätzliche gerichtete Vortriebskraft zur Beschleunigung vorliegt.

Der Drehwinkel des ersten Führungselements 10, während dem das erste Massenelement M die maximale Auslenkung gegenüber dem Rotationszentrum 2 aufweist und damit eine maximale Zentrifugalkraft auf die Vorrichtung 1 überträgt bzw. eine maximale Zentripetalkraft durch das erste Führungselement 10 ausgeübt wird, sowie gegebenenfalls der Drehwinkel an dem die Reimpulskraft zur Rückführung des ersten Massenelementes M ausgeübt wird, bestimmen die Ausrichtung der erzielten Vortriebs- bzw. Beschleunigungskraft auf die Vorrichtung 1. Indem der Drehwinkel der maximalen Auslenkung des ersten Massenelements M minimiert wird und vorzugsweise mit der Ausübung der Reimpulskraft gezielt zusammenfällt, kann ein spezifischer Impuls bzw. eine spezifische Vortriebskraft gezielt in eine Raumrichtung erzeugt werden.

Durch periodische Wiederholung der Auslenkung des ersten Massenelements M kann eine entsprechende Beschleunigung pro Umdrehung des ersten Führungselements 10 ausgeübt werden.

Gemäß dem Ausführungsbeispiel nach Fig. 1 ist ferner vorstellbar, dass abwechselnd eine Auslenkung des ersten Massenelements M in Richtung des ersten und zweiten Endes 11; 12 über den jeweils selben Drehwinkelbereich erfolgt. So sind pro vollständiger Umdrehung des ersten Führungselements 10 anhand der Trägheits- bzw. Zentrifugalkraft des ersten Massenelements M jeweils zwei Kraftimpulse auf die Vorrichtung 1 ausübbar.

Des Weiteren weist die Vorrichtung 1 nach Fig. 1 im Rotationszentrum 2 eine Magnetspule 13 auf. Anhand der Magnetspule 13 ist das erste Massenelement M vorzugsweise im Rotationszentrum 2 bzw. der Rotationsachse X fixierbar. Es ist möglich, das erste Massenelement M in dem Rotationszentrum 2 festzuhalten.

Alternativ kann anstatt der Magnetspule 13 ein bewegbares Bolzenelement zum mechanischen Eingriff und zur Fixation des ersten Massenelements M in bzw. an dem ersten Führungselement 10 vorgesehen sein. Insbesondere kann das Bolzenelement mittels eines Schrittmotors, eines Servomotors, eines Fluiddrucks oder dergleichen zwischen einer ersten und zweiten Position bewegbar sein, um einen zweckmäßigen Eingriff in das Massenelement M bedarfsweise bereitstellen zu können.

Des Weiteren kann das Bolzenelement federbelastet ausgestaltet sein, beispielsweise mit einer Zug- oder Druckfeder, um die Positionierung des Bolzenelements in der ersten oder zweiten Position auch im Fehlerfall sicherzustellen.

Des Weiteren kann alternativ zu dem ersten Ausführungsbeispiel nach Fig. 1 vorgesehen sein, dass die erfindungsgemäße Vorrichtung 1 nur mit dem ersten oder nur mit dem zweiten Fluidanschluss 11b; 12b ausgebildet ist. In diesem Sinne kann eine Bewegung des ersten Massenelements M mittels Unterdruck bzw. Überdruck in dem ersten oder zweiten Volumen 11a; 12a in kontrollierter Form bereitstellbar sein.

In Fig. 2 ist ein zweites Ausführungsbeispiel der erfindungsgemäßen Vorrichtung 1 zu verschiedenen Zeitpunkten einer Rotationsbewegung des ersten Führungselements 10 (vgl. Pfeilrichtung in Fig. 2; gestrichelte Veranschaulichung des ersten Führungselements 10) dargestellt. Im Vergleich zu dem ersten Ausführungsbeispiel nach Fig. 1 ist insbesondere keine Magnetspule 13 im Rotationszentrum 2 entlang des ersten Führungselements 10 vorgesehen bzw. gezeigt.

Anhand von Fig. 2 ist dargestellt, wie das erste Massenelement M bei Rotation des ersten Führungselements 10 kontrolliert bewegbar ist. Insbesondere erfolgt eine Bewegung des ersten Massenelements M entlang der Bewegungsbahn 30, um eine gerichtete Kraft bzw. Beschleunigungskraft auf die Vorrichtung 1 ausüben zu können.

Zu Beginn der Bewegung entlang der Bewegungsbahn 30 erfolgt eine Bewegung des Massenelements M in Richtung des ersten Endes 11 des ersten Führungselements 10. Die Auslenkung des Massenelements M aus dem Rotationszentrum 2 kann anhand der Zentrifugalkraft und/oder einer fluidstatischen Druckdifferenz zwischen dem ersten und zweiten Volumen 11a; 12a erfolgen.

Eine solche Druckdifferenz kann anhand eines Überdrucks oder eines Unterdrucks in einem der zwei Volumina 11a; 12a bereitgestellt werden. In diesem Sinne ist die Ausbildung der erfindungsgemäßen Vorrichtung mit zwei Fluidanschlüssen 11b; 12b oder mit lediglich einem der zwei Fluidanschlüsse 11b; 12b vorstellbar.

Sobald das erste Massenelement M das erste Ende 11, oder alternativ das zweite Ende 12, des ersten Führungselements 10 erreicht hat, wirkt die maximale Zentripetalkraft des ersten Führungselementes 10 bzw. wirkt die maximale Zentrifugalkraft des ersten Massenelements M auf das erste Führungselement 10 und damit auf die Vorrichtung 1 ein. Es wird eine gerichtete Beschleunigungskraft auf die Vorrichtung 1 übertragen.

Sobald das Führungselement 10 in seiner Rotationsbewegung denjenigen Winkelbereich überschritten hat, in dessen Richtung ein Vortrieb bzw. eine Beschleunigung erfolgen soll, wird in zweckmäßiger Form eine Rückbewegung des ersten Massenelement M in Richtung des Rotationszentrums 2 eingeleitet.

Die Rückbewegung des ersten Massenelements M in Richtung des Rotationszentrums 2 kann mittels eines fluidstatischen Überdrucks bzw. Unterdrucks in dem ersten bzw. zweiten Volumen 11a; 12a erfolgen. Indem das erste Massenelement M in das Rotationszentrum 2 zurückgeführt wird, wird über den weiteren Rotationswinkelbereich des rotierenden ersten Führungselements 10 die Zentrifugalkraft des ersten Massenelements M bzw. die Zentripetalkraft des ersten Führungselements 10 reduziert. Des Weiteren ist hierbei eine Reimpulskraft ausübbar, insbesondere wenn die Änderung der Druckverhältnisse schlagartig erfolgt, also innerhalb eines möglichst kurzen Zeitraums.

Bedarfsweise kann das erste Massenelement M pro vollständiger Rotationsumdrehung des ersten Führungselements 10 einmal in Richtung des ersten oder zweiten Endes 11; 12 ausgelenkt werden. Alternativ kann das erste Massenelement M pro vollständiger Rotationsumdrehung des ersten Führungselements 10 jeweils einmal in Richtung des ersten Endes 11 und einmal in Richtung des zweiten Endes 12 ausgelenkt werden, sodass jeweils eine Auslenkung pro halber Rotationsumdrehung des ersten Führungselements 10 im identischen Rotationswinkelbereich erfolgt.

In Summe ergibt sich über den Winkelbereich des rotierenden ersten Führungselements 10 von insgesamt 360 Grad eine zweckmäßig gerichtete Beschleunigungskraft auf Basis der Zentrifugal- und Zentripetalkräfte sowie einer möglichen Reimpulskraft, die im Zusammenspiel des ersten Massenelements M mit dem ersten Führungselement 10 erzeugbar bzw. bereitstellbar sind.

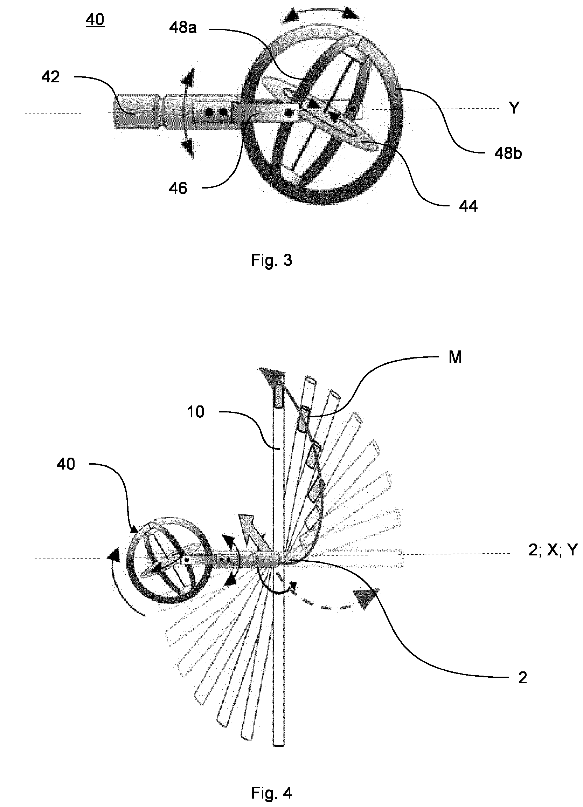

In den Fig. 3 und 4 ist eine Seitenansicht einer Stabilisierungseinheit 40 sowie ein drittes Ausführungsbeispiel der Vorrichtung 1 mit der Stabilisierungseinheit 40 dargestellt.

Die Stabilisierungseinheit 40 ist nach Fig. 3 als ein stabilisierender Kreisel ausgebildet.

Die Stabilisierungseinheit 40 kann ein Halteelement 42 aufweisen, an dem ein Y-Gabelelement 46 angeordnet ist. Das Halteelement 42 kann beispielsweise um seine Längsachse bzw. die Stabilisierungsachse Y rotierbar an der Vorrichtung 1 angeordnet sein. Alternativ kann das Y-Gabelelement 46 um die Längsachse des Halteelements 42 bzw. die Stabilisierungsachse Y rotierbar an dem Halteelement 42 angeordnet sein.

Des Weiteren weist die Stabilisierungseinheit 40 gemäß Fig. 3 ein erstes Ringelement 48a und ein zweites Ringelement 48b auf, die vorzugsweise starr miteinander verbunden sind. Das zweite Ringelement 48b kann rotierbar an dem Y-Gabelelement 46 befestigt sein. In dem ersten Ringelement 48a ist ein Kreiselelement 44 angeordnet und vorzugsweise gelenkig bzw. rotierbar mit dem ersten Ringelement 48a verbunden.

Indem das Kreiselelement 44, das erste und zweite Ringelement 48a; 48b, das Y-Gabelelement 46 und das Halteelement 42 derartig gelenkig miteinander verbunden sind, kann das Kreiselelement 44 in Summe um alle drei Raumachsen rotieren bzw. rotiert werden (vgl. Pfeilrichtungen in Fig. 3).

Bevorzugter Weise ist das Kreiselelement 44 mit einer geringen bzw. minimalen Masse ausgebildet, wobei bedarfsweise eine hohe Rotationsgeschwindigkeit des Kreiselelements 44 gewählt werden kann. So ist eine bedarfsweise Stabilisierung der Vorrichtung 1 erzielbar.

Die Rotationsgeschwindigkeit des Kreiselelements 44 ist vorzugsweise mittels mehrerer Rotationsantriebe zweckmäßig bereitstellbar. Diese Rotationsantriebe können in den gelenkigen Verbindungen der Stabilisierungseinheit 40 angeordnet sein oder in diesen zweckmäßig angreifen.

Es können Schrittmotoren, Seilzüge, Zahnräder oder dergleichen als Rotationsantriebe bzw. zur zweckmäßigen Kraftübertragung vorgesehen sein.

Gemäß Fig. 4 ist die Stabilisierungseinheit 40 der Vorrichtung 1 vorzugsweise an dem ersten Führungselement 10 angeordnet. Insbesondere ist die Stabilisierungseinheit 40 in dem Rotationszentrum 2 der Vorrichtung 1 bzw. des ersten Führungselements 10 vorgesehen. So ist bevorzugter Weise die Stabilisierungsachse Y der Stabilisierungseinheit 40 in einem nicht ausgelenkten Zustand parallel zu, vorzugsweise überlappend mit, der Rotationsachse X des ersten Führungselements 10 ausgerichtet. Alternativ kann die Stabilisierungseinheit 40 mit der Stabilisierungsachse Y parallel verschoben zu der Rotationsachse X des wenigstens einen ersten Führungselementes 10 ausgerichtet sein. Des Weiteren kann die Stabilisierungsachse Y auch orthogonal oder anderweitig winkelversetzt zu der Rotationsachse X ausgerichtet sein.

Die Stabilisierungsachse Y gibt eine Achse an, um die sich das Kreiselelement 44 bzw. die Stabilisierungseinheit 40 derart zweckmäßig drehen kann, sodass eine gezielte Stabilisierung der Vorrichtung 1 bzw. des wenigstens einen ersten Führungselements 10 bereitstellbar ist.

Indem das Kreiselelement 44 unter anderem über das Halteelement 42 beabstandet zu dem ersten Führungselement 10 angeordnet ist, wirkt eine translatorische Beschleunigungskraft des ersten Führungselements 10 als eine Auslenkungs- / Neigungs- / Nebenkraft auf die Stabilisierungsachse Y der Stabilisierungseinheit 40. Insbesondere anhand des Halteelements 42 wird in diesem Sinne ein mechanischer Hebel bzw. eine mechanische Hebelwirkung bereitgestellt.

Im Zuge des zweckmäßigen Einsatzes der Vorrichtung 1 bzw. des ersten Führungselementes 10 unter geeigneter Bewegung des ersten Massenelements M; M1, können neben der gezielt herbeigeführten, gerichteten Beschleunigungskraft in Bewegungsrichtung auch Kräfte in andere Raumrichtungen auftreten (vgl. gestrichelter Pfeil in Fig. 4). Diese Nebenkräfte sind im Allgemeinen deutlich kleiner als die gerichtete Bewegungskraft, können jedoch zu einer unerwünschten Aus- bzw. Ablenkung der Vorrichtung 1 führen.

Da ein rotierender Körper, wie z.B. ein Kreisel, im sich drehenden Zustand gegen eine Neigung bzw. Auslenkung seiner eigenen Rotationsachse einen Widerstand bzw. eine Widerstandskraft aufbringt, führt eine Neigung des Kreiselelementes 44 zu einer reaktiven Bewegung bzw. zu einer Widerstands-/Gegenkraft z.B. entlang des Y-Gabelelementes 46 und/oder des Halteelementes 42. Des Weiteren führt eine Rotation / Neigung der Stabilisierungseinheit 40 zu einer Präzession des Kreiselelementes 44, also einer Auslenkung der Drehachse(n) des Kreiselelementes 44. Diese Präzession überträgt sich ebenfalls auf das Y-Gabelelement 46 und das Halteelement 42.

Diese Bewegungskräfte ergeben in Summe vorzugsweise eine Kraft bzw. Gegenkraft, die idealerweise einer Ausweichbewegung des ersten Führungselementes 10 genau entgegengestellt ist bzw. entgegenwirkt. Somit ist eine Widerstandskraft gegen eine unerwünschte Auslenkung des ersten Führungselementes 10 bzw. der Rotationsachse X bzw. der Vorrichtung 1 mittels der Stabilisierungseinheit 40 in zweckmäßiger Weise bereitstellbar.

Die Basis einer solchen Gegenkraft ist die stabile Kreiselachse des sich drehenden Kreiselelementes 44. Da sich deren Ausrichtung jedoch durch die (aktive) Rotation und/oder die Präzession gegenüber der Rotationsachse X des ersten Führungselementes 10 ständig ändern kann, muss beispielsweise durch eine Mehrzahl von gelenkigen Verbindungen oder durch weitere Ringelemente gegebenenfalls eine dynamische Stabilisierung der Richtung dieser (Gegen-)Kraft bereitgestellt werden.

In diesem Sinne ist es vorstellbar, weitere Gelenke bzw. weitere Ringelemente, oder andere geometrische Formen und (Gelenk-)Verbindungen, ergänzend zu den Ringelementen 48a; 48b vorzusehen. Beispielsweise kann ein solcher Aufbau die Ringelemente 48a; 48b umfassen und diese in mindestens einer weiteren (Raum-)Achse gelenkig bzw. aktiv rotierbar lagern. Zudem können die Ringelemente 48a; 48b vorzugsweise gelenkig bzw. aktiv rotierbar an dem Y-Gabelelement 46 befestigt sein. Für die aktive Rotation können Schrittmotoren, Seilzüge, Zahnräder oder dergleichen als Rotationsantriebe bzw. zur zweckmäßigen Kraftübertragung vorgesehen sein.

Indem das Kreiselelement 44 zweckmäßig rotiert wird, insbesondere aktiv rotiert wird, kann einer Neigung bzw. Auslenkung der Rotationsachse X des ersten Führungselements 10 bzw. der Stabilisierungsachse Y entgegengewirkt und eine Stabilisierung der Vorrichtung 1 erzielt werden.

Die Applikation einer Kraft bzw. Gegenkraft mittels der Stabilisierungseinheit 40, die einer Ausweichbewegung des ersten Führungselementes 10 entgegegengericht ist, kann fortlaufend, also periodisch oder kontinuierlich, nachjustierbar bzw. adaptierbar sein. Hierzu kann es unter anderem notwendig sein, die Kipprichtung wenigstens einer der Drehachsen der Kreisleinheit 44, insbesondere der Stabilisierungsachse Y, zu ändern. So ist es möglich, dass eine Kippung / Auslenkung der Stabilisierungseinheit 40 entgegen einer Präzessionsbewegung erfolgt, um eine geeignete, insbesondere maximale Widerstands- / Gegenkraft bereitzustellen.

Bevorzugter Weise wird das Kreiselelement 44 mittels eines zweckmäßigen Antriebs um wenigstens eine Raumachse aktiv rotiert, sodass Neben- bzw. Auslenkungskräften, welche die Stabilisierungsachse Y neigen bzw. auslenken, mittels einer Gegenkraft gezielt entgegengewirkt werden kann.

Insbesondere kann die Stabilisierungswirkung durch die Stabilisierungseinheit 40 derart gezielt eingestellt werden, dass die gerichtete Beschleunigungskraft, die die Vorrichtung in die gewünschte Fortbewegungsrichtung beschleunigt, maximierbar ist.

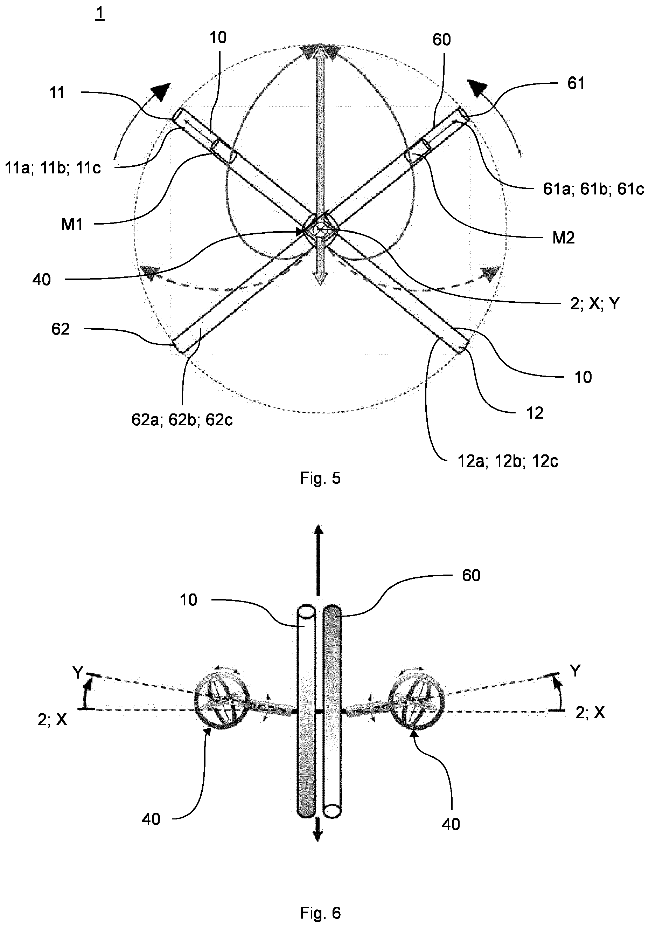

In Fig. 5 ist ein viertes Ausführungsbeispiel der Vorrichtung 1 mit symmetrischer Anordnung von erstem und zweitem Führungselement 10; 60 und mit wenigstens einer Stabilisierungseinheit 40 (in Fig. 5 nicht sichtbar) gezeigt.

Insbesondere ist ein zweites Führungselement 60 vorgesehen, dass vorzugsweise baugleich zu dem ersten Führungselement 10 ausgebildet ist. In dem zweiten Führungselement 60 ist ein zweites Massenelement M2, korrespondierend zu dem ersten Massenelement M1 in dem ersten Führungselement 10, bewegbar angeordnet.

So ist das zweite Führungselement 60 mit einem ersten Ende 61 ausgebildet, in dessen Bereich ein erstes Volumen 61a, ein erster Fluidanschluss 61b und ein erstes Ventil 61c vorgesehen ist, sowie im Bereich eines zweiten Endes 62 ein zweites Volumen 62a, ein zweiter Fluidanschluss 62b und ein zweites Ventil 62c vorgesehen sein können.

Das erste und zweite Führungselement 10; 60 sind gemäß Fig. 5 vorzugsweise entlang der Rotationsachse X übereinander angeordnet und drehen sich gegenläufig um das Rotationszentrum 2 bzw. die Rotationsachse X. Des Weiteren ist bevorzugter Weise vorgesehen, dass an beiden Führungselementen 10; 60 jeweils eine Stabilisierungseinheit 40 angeordnet ist, sodass sich ein symmetrischer Aufbau der Vorrichtung 1 ergibt.

In Fig. 6 ist eine Seitenansicht des Ausführungsbeispiels gemäß Fig. 5 mit zwei Stabilisierungseinheiten 40, die symmetrisch angeordnet sind, gezeigt.

Die Stabilisierungseinheiten 40 können nach Fig. 6 an den abgewandten Seiten der Führungselemente 10; 60 angeordnet sein, sodass das erste und zweite Führungselement 10; 60 unmittelbar nebeneinander positioniert sind. Es ist ein symmetrischer Aufbau der Vorrichtung 1 bzw. der Führungselemente 10; 60 mit den zugehörigen Stabilisierungseinheiten 40 verfügbar, wobei eine stabilisierte Rotation der Führungselemente 10; 60 um die Rotationsachse X bzw. die Stabilisierungsachse Y zur Bereitstellung einer gerichteten Beschleunigungskraft erfolgt.

Alternativ können die Stabilisierungseinheiten 40 mittelbar bzw. indirekt mit den Führungselementen 10; 60 in Verbindung stehen.

Es ist aus Fig. 6 ersichtlich, dass das Halteelement 42 der jeweiligen Stabilisierungseinheit 40 gelenkig mit dem ersten bzw. zweiten Führungselement 10; 60 verbunden ist.

Des Weiteren ist der Fig. 6 zu entnehmen, dass die Stabilisierungsachse Y einer Auslenkung bzw. Präzession unterliegt und gegenüber der Rotationsachse X geneigt bzw. ausgelenkt ist. Die Rotationsachse X und die jeweiligen Stabilisierungsachsen Y der Stabilisierungseinheit 40 überlagern sich nur teilweise, insbesondere in ihrem Schnittpunkt.

Eine solche Auslenkung der Stabilisierungseinheiten 40 bzw. der Stabilisierungsachsen Y erfolgt durch Nebenkräfte / Nebenbewegungen bzw. Nebenbeschleunigungen, die von der vorgesehenen Bewegungsrichtung (vgl. großer Pfeil in Fig. 6) der Vorrichtung 1 abweichen und während der zweckmäßigen Verwendung der Führungselemente 10; 60 auftreten (vgl. kleiner Pfeil in Fig. 6).

Die rotierenden Kreiselelemente 44 der Stabilisierungseinheiten 40, die vorzugsweise um wenigstens eine Raumachse aktiv rotiert werden können, wirken der winkeligen Auslenkung der Stabilisierungsachsen Y entgegen. Somit können Nebenbeschleunigungen der Führungselemente 10; 60 durch die Stabilisierungseinheiten 40 kompensiert bzw. diesen entgegengewirkt werden. Es ist eine stabilisierte, gerichtete Bewegung der Vorrichtung 1 bereitstellbar. Zusammenfassend kann anhand der vorliegenden Erfindung eine Vorrichtung 1 bereitgestellt werden, die eine medienübergreifende bzw. Fortbewegungsartübergreifende Kraftausübung zur Beschleunigung, insbesondere eines Fahrzeugs, ermöglicht.

Indem die Vorrichtung 1 sowohl zur zweidimensionalen als auch dreidimensionalen Kraftausübung im Raum geeignet ist, kann mittels der erfindungsgemäßen Vorrichtung 1 die Fortbewegung sowohl zu Land, im Wasser als auch z.B. in der Luft ermöglicht werden. Es ist somit der Übergang eines einzelnen Fahrzeuges zwischen verschiedenen Umgebungsmedien, wie Luft und Wasser, vorstellbar. Des Weiteren können Nebenkräfte, die abweichend von der vorgesehen Bewegungsrichtung auftreten, mittels der Stabilisierungseinheit 40 aufgehoben bzw. kompensiert und einer unerwünschten Auslenkung bzw. Trudel-/Präzessionsbewegung der Vorrichtung 1 entgegengewirkt werden.

Indem die erfindungsgemäße Vorrichtung bzw. Antriebsvorrichtung 1 keine direkte Interaktion mit dem umgebenden Medium notwendig macht, sondern vielmehr gekapselt innerhalb eines Fahrzeugs vorgesehen sein kann, ist eine medienunabhängige sowie wartungsarme Methode zur Fortbewegung verfügbar.

### Bezugszeichenliste

- 1: Vorrichtung
- 2: Rotationszentrum
- 10: erstes Führungselement
- 11: erstes Ende
- 11a: erstes Volumen
- 11b: erster Fluidanschluss
- 11c: erstes Ventil
- 12: zweites Ende
- 12a: zweites Volumen
- 12b: zweiter Fluidanschluss
- 12c: zweites Ventil
- 13: Magnetspule
- 20: äußere Kreisbahn um Rotationszentrum
- 30: Bewegungsbahn des ersten Massenelements
- 40: Stabilisierungs-/stabilisierende Kreiseleinheit
- 42: Halteelement
- 44: Kreiselelement
- 46: Y-Gabelelement
- 48a: erstes Ringelement
- 48b: zweites Ringelement
- 60: zweites Führungselement
- 61: erstes Ende
- 61a: erstes Volumen
- 61b: erster Fluidanschluss
- 61c: erstes Ventil
- 62: zweites Ende
- 62a: zweites Volumen
- 62b: zweiter Fluidanschluss
- 62c: zweites Ventil
- M; M1: erstes Massenelement
- M2: zweites Massenelement
- X: Rotationsachse
- Y: Stabilisierungsachse der Stabilisierungseinheit

## Patentansprüche

1. Vorrichtung (1) zur Bereitstellung einer gerichteten Beschleunigungskraft, insbesondere für ein Fahrzeug, mit einem Grundelement, wenigstens einem ersten Führungselement (10), das zur Rotation um ein Rotationszentrum (2) an dem Grundelement gelagert ist, und mit wenigstens einem ersten Massenelement (M; M1), das bewegbar in oder an dem ersten Führungselement (10) aufgenommen ist,
wobei das erste Führungselement (10) durch das wenigstens eine erste Massenelement (M; M1) in wenigstens ein erstes Volumen (11a) und ein zweites Volumen (12a) unterteilt ist,
wobei wenigstens ein erster Fluidanschluss (11b) an dem ersten Führungselement (10) zur strömungsmäßigen Verbindung mit dem ersten Volumen (11a) vorgesehen ist,
wobei das erste Massenelement (M; M1) derart in oder an dem ersten Führungselement (10) aufgenommen ist, dass das erste Massenelement (M; M1) mittels einer Druckdifferenz zwischen dem ersten Volumen (11a) und dem zweiten Volumen (12a) entlang des ersten Führungselements (10) verschiebbar ist,
wobei das erste Massenelement (M; M1) derart gezielt entlang des ersten Führungselements (10) verschiebbar ist, dass während einer Rotation des ersten Führungselements (10) mittels dem ersten Massenelement (M; M1) eine bedarfsweise ausgerichtete Kraft erzeugbar ist.

2. Vorrichtung (1) nach Anspruch 1,
**dadurch gekennzeichnet, dass**
wenigstens ein erstes Ventil (11c) an dem ersten Fluidanschluss (11b) vorgesehen ist.

3. Vorrichtung (1) nach Anspruch 1 oder 2,
**dadurch gekennzeichnet, dass**
das wenigstens eine erste Führungselement (10) mittels eines Hilfsantriebs, insbesondere eines Schrittmotors, gegenüber dem Rotationszentrum (2) in Rotation versetzbar ist.

4. Vorrichtung (1) nach einem der vorhergehenden Ansprüche,
**dadurch gekennzeichnet, dass**
wenigstens eine Druckquelle mit dem wenigstens einen ersten Fluidanschluss (11b) strömungsmäßig verbindbar ist, zur bedarfsweisen Bereitstellung eines Fluiddrucks in dem ersten Volumen (11a) des ersten Führungselements (10).

5. Vorrichtung (1) nach einem der vorhergehenden Ansprüche,
**dadurch gekennzeichnet, dass**
der erste Fluidanschluss (11b) mit einer ersten Fluiddruck-Leitungseinheit strömungsmäßig verbindbar und in dieser gelagert ist.

6. Vorrichtung (1) nach einem der vorhergehenden Ansprüche,
**dadurch gekennzeichnet, dass**
das Führungselement (10) mit dem ersten Ende (11) an einer äußeren Kreisbahn (20) und mit dem zweiten Ende (12) an dem Rotationszentrum (2) angeordnet ist, oder
dass das erste und zweite Ende (11; 12) des ersten Führungselements (10) äquidistant zu dem Rotationszentrum (2) angeordnet sind.

7. Vorrichtung (1) nach einem der vorhergehenden Ansprüche,
**dadurch gekennzeichnet, dass**
eine Magnetspule (13) an dem zweiten Ende (12) des ersten Führungselements (10) oder im Rotationszentrum (2) an dem ersten Führungselement (10) vorgesehen ist, sodass das erste Massenelement (M; M1) des ersten Führungselements (10) magnetisch fixierbar ist.

8. Vorrichtung (1) nach einem der vorhergehenden Ansprüche,
**dadurch gekennzeichnet, dass**
eine Mehrzahl von Führungselementen (10; 60) mit jeweils einem Massenelement (M1; M2) um das Rotationszentrum (2) symmetrisch verteilt angeordnet ist.

9. Vorrichtung (1) nach Anspruch 8,
**dadurch gekennzeichnet, dass**
die Führungselemente (10) derart in einer jeweiligen Rotationsrichtung, einer jeweiligen Kreiswinkelposition zueinander und einer jeweiligen Position des zugehörigen Massenelements (M1; M2) steuerbar sind, sodass eine im Wesentlichen gleichmäßige Kraft zur Beschleunigung erzeugbar ist.

10. Vorrichtung (1) nach einem der vorhergehenden Ansprüche,
**dadurch gekennzeichnet, dass**
wenigstens eine Stabilisierungseinheit (40), insbesondere eine stabilisierende Kreiseleinheit, vorgesehen ist, die an der Vorrichtung (1), insbesondere an dem wenigstens einen ersten Führungselement (10), angeordnet ist und wenigstens zeitweise eine Stabilisierungssachse (Y) ausbildet,
wobei die Stabilisierungssachse (Y) versetzt zu und/oder wenigstens teilweise überlagernd mit einer Rotationsachse (X) des wenigstens einen ersten Führungselementes (10) ausgerichtet ist, zur Bereitstellung einer stabilisierenden Kraft auf die Vorrichtung (1), insbesondere auf das wenigstens eine erste Führungselement (10).

11. Vorrichtung (1) nach Anspruch 10,
**dadurch gekennzeichnet, dass**
die Stabilisierungseinheit (40) als eine stabilisierende Kreiseleinheit ausgebildet ist, mit wenigstens einem Halteelement (42) sowie einem Kreiselelement (44),
wobei das Kreiselelement (44) gegenüber dem wenigstens einen ersten Führungselement (10) um alle drei Raumachsen rotatorisch bewegbar gelagert ist.

12. Vorrichtung (1) nach Anspruch 11,
**dadurch gekennzeichnet, dass**
das Kreiselement (44) mittels dem Halteelement (42) in einem Abstand zu dem wenigstens einen ersten Führungselement (10) angeordnet ist.

13. Vorrichtung (1) nach Anspruch 11 oder 12,
**dadurch gekennzeichnet, dass**
wenigstens ein erster Rotationsantrieb zur aktiven Rotation des Kreiselelements (44) um wenigstens eine der Raumachsen vorgesehen ist.

14. Fahrzeug, insbesondere ein Landfahrzeug, ein Luftfahrzeug, ein Raumfahrzeug oder ein Wasserfahrzeug, mit einer Vorrichtung (1) gemäß einem der vorhergehenden Ansprüche.

15. Verfahren zur Bereitstellung und/oder Erzeugung und/oder Ausübung einer gerichteten Beschleunigungskraft mittels einer Vorrichtung oder einem Fahrzeug gemäß einem der vorhergehenden Ansprüche, wenigstens die folgenden Schritte aufweisend:
- Bereitstellung einer rotatorischen Bewegung des wenigstens einen ersten Führungselements (10);
- Einstellung einer Druckdifferenz zwischen dem ersten und zweiten Volumen (11a; 12a), sodass das erste Massenelement (M; M1) in einem spezifischen Punkt bzw. Winkelbereich der rotatorischen Bewegung des ersten Führungselements (10) zum ersten oder zweiten Ende (11; 12) des ersten Führungselements (10) ausgelenkt wird;
- Umkehrung der Druckdifferenz zwischen dem ersten und zweiten Volumen (11a; 12a), sodass das erste Massenelement (M; M1) in den Bereich bzw. die Nähe des Rotationszentrums zurückkehrt, um eine Trägheitskraft bzw. Zentrifugalkraft des ersten Massenelements (M; M1) auf die Vorrichtung (1) zu reduzieren.
